(19) Europäisches Patentamt
European Patent Office
Office européen des brevets

(11) **EP 4 200 727 B1**

(12) **EUROPÄISCHE PATENTSCHRIFT**

(45) Veröffentlichungstag und Bekanntmachung des Hinweises auf die Patenterteilung:
**12.06.2024 Patentblatt 2024/24**

(21) Anmeldenummer: **21770254.7**

(22) Anmeldetag: **03.09.2021**

(51) Internationale Patentklassifikation (IPC):
**G06F 21/52** *(2013.01)* **G06F 11/07** *(2006.01)*

(52) Gemeinsame Patentklassifikation (CPC):
**G06F 21/52; G06F 11/0736; G06F 11/0751; G06F 11/0793;** G06F 2201/83

(86) Internationale Anmeldenummer:
**PCT/EP2021/074357**

(87) Internationale Veröffentlichungsnummer:
**WO 2022/069153 (07.04.2022 Gazette 2022/14)**

(54) **VERFAHREN UND EINRICHTUNG ZUR SICHERUNG VON ZUGRIFFEN AUF CODIERTE VARIABLEN IN EINEM COMPUTERPROGRAMM**

METHOD AND DEVICE FOR SECURING ACCESS TO CODED VARIABLES IN A COMPUTER PROGRAM

PROCÉDÉ ET DISPOSITIF DE SÉCURISATION DES ACCÈS AUX VARIABLES CODÉES DANS UN PROGRAMME INFORMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2020 EP 20199045**

(43) Veröffentlichungstag der Anmeldung:
**28.06.2023 Patentblatt 2023/26**

(73) Patentinhaber: **Siemens Aktiengesellschaft 80333 München (DE)**

(72) Erfinder: **WITTE, Karl-Hermann 90768 Fürth (DE)**

(74) Vertreter: **Siemens Patent Attorneys Postfach 22 16 34 80506 München (DE)**

(56) Entgegenhaltungen:
DE-A1-102010 037 457

• Ute Schiffel ET AL: "ANB- and ANBDmem-Encoding: Detecting Hardware Errors in Software" In: "ICIAP: International Conference on Image Analysis and Processing, 17th International Conference, Naples, Italy, September 9-13, 2013. Proceedings", 1. Januar 2010 (2010-01-01), Springer, Berlin, Heidelberg 032548, XP055448350, ISBN: 978-3-642-17318-9 Bd. 6351, Seiten 169-182, DOI: 10.1007/978-3-642-15651-9_13, Abschnitte 2 und 3

• HOFFMANN MARTIN ET AL: "dOSEK: the design and implementation of a dependability-oriented static embedded kernel", 21ST IEEE REAL-TIME AND EMBEDDED TECHNOLOGY AND APPLICATIONS SYMPOSIUM, IEEE, 13. April 2015 (2015-04-13), Seiten 259-270, XP032777211, DOI: 10.1109/RTAS.2015.7108449

**Beschreibung**

Die Erfindung betrifft ein Verfahren zur Sicherung von Zugriffen auf codierte Variablen in einem Computerprogramm gemäß dem Oberbegriff des Patentanspruchs 1, eine Einrichtung zur Sicherung von Zugriffen auf codierte Variablen in einem Computerprogramm gemäß dem Oberbegriff des Patentanspruchs 11, und ein Computerprogrammprodukt zur Sicherung von Zugriffen auf codierte Variablen in einem Computerprogramm gemäß dem Oberbegriff des Patentanspruchs 12.

In sicherheitsgerichteten Programmen für industrielle Anwendungen, die typischerweise auf eingebetteter Hardware wie z.B. Speicherprogrammierbaren Steuerungen (SPS) oder anderen industriellen Automatisierungskomponenten ablaufen, muss sichergestellt werden, dass Bitfehler in Variablen erkannt werden und dass zur Abarbeitung in einem Zyklus vorgesehene Programmteile auch tatsächlich vollständig durchlaufen werden.

Bei der Verarbeitung funktional sicherer Daten müssen interne Fehler der Sicherheitsfunktion erkannt werden und eine Sicherheitsreaktion (z.B. Ausgabe sicherer Ersatzwerte oder einer Warnmeldung) zur Folge haben. Dies wird klassischerweise durch Hardware-Replikation und Ergebnisvergleich erreicht. Eine Alternative ist die Kodierung der Sicherheitsfunktion mittels arithmetischen Kodes. Einfache arithmetische Kodes erkennen nicht alle Fehler und müssen geeignet ergänzt werden. Dies führt typischerweise zu erheblichem Aufwand und/oder schränkt die Verwendung ein.

In fortgeschritteneren sicherheitsgerichteten Lösungen wird eine Hardware-unabhängige Variante von Coded-Processing verwendet. In Coded-Processing erfolgt die Erfassung und Propagation von Fehlerinformation in jeder Variablen. Dies führt bisher dazu, dass komplexe Anwendungen oft nicht angemessen abgebildet werden können.

Es besteht also ein Bedarf für ein Verfahren mit linearer Komplexität zur Erfassung und Propagation von Fehlern in komplexen Softwaresystemen für die sicherheitsgerichtete Programmierung mittels arithmetischer Codes.

Beispiele für komplexe Anwendungen:

- Asynchrone Änderung von Daten (z.B. Bedienungen durch HMI - Human Machine Interface)

- Remanente Daten

- Verschachtelte Programme (IF-THEN-ELSE, LOOP, ...)

- Globale Daten

- CIR (Change in Run - Programm- oder Ablaufänderungen zur Laufzeit)

- Cloud-basierte Safety-Anwendungen

Nach dem gegenwärtigen Stand der Technik gibt es folgende Lösungsstrategien:

- Redundanz/Diversität: Das Sicherheitsprogramm wird mehrfach unabhängig ausgeführt, so dass "Common Causes" (gleiche Fehlerursachen) ausgeschlossen werden können. Dieser Ansatz erfordert abhängig von der Komplexität der Anwendung einen erheblichen Aufwand für die Synchronisation der Abläufe und für die sichere Erfassung der Fehler.

- Bei "Distributed Safety" wird auf Basis des HW-Modells zu den CPUs, auf denen das Sicherheitsprogramm abläuft, die tatsächlich zu erwartende Fehlerrate abgeschätzt. Die Abschätzung und die Festlegung des Modells müssen für jede HW gesondert erfolgen.

- Dynamische Signatur für jede Variable: Jede Variable erhält eine dynamische Signatur. Diese Signatur wird bei jeder Änderung der Variable geändert. Der Aufwand für die Verwaltung der dynamischen Signatur wächst mit der Komplexität des Anwenderprogramms. Breits bei einzelnen Anwendungen hat sich der Aufwand für die Verwaltung durch kleine Änderungen in der Kontrollstruktur verdoppelt.

Die Druckschriften Schiffel et al. "ANB- and ANBDmem-Encoding: Detecting Hardware Errors in Software" (SAFECOMP 2010, LNCS 6351, pp. 169-182) und DE102010037457A1, ebenfalls Schiffel et al. "Verfahren zur Datenverarbeitung zum Bereitstellen eines Wertes zum Ermitteln, ob bei einer Ausführung eines Programms ein Fehler aufgetreten ist [...]" zeigt die Summierung von Signaturen durchlaufener Programmteile in einem Akkumulator-Wert und Überprüfung des Programmablaufs anhand des Akkumulator-Wertes durch einen Überprüfungs-Schaltkreis.

Zusammenfassend kann man sagen, dass die Lösungsansätze nach dem Stand der Technik mit der aktuell stark wachsenden Komplexität der Anforderungen immer weniger als alleinige Lösung für neue Lösungen geeignet sind.

Sie müssen um Maßnahmen zur Beherrschung der Komplexität ergänzt werden, die es ermöglichen, dass sich die Komplexität des Sicherheitsprogramms nur unwesentlich von der Komplexität des entsprechenden Standardprogramms unterscheidet.

Die Erfindung ist insbesondere für Coded Processing geeignet.

In Coded Processing sind die Variablen codiert. Dazu werden Werte (xf) in Variablen mittels AN-, ANB- (AN+B), ANBD- Codes oder durch artverwandte Codes (Mischverfahren) codiert, also auf codierte Werte abgebildet. Im Beispiel der ANBD-Codierung werden alle numerischen Variablen nach einer Vorschrift der Form:

$$x_c \ := \ x_f * A \ + \ B_x \ + \ D_x$$

codiert, und die arithmetischen Operationen (+,-,*,/, usw.) werden so angepasst, dass die Verarbeitung im codierten Bereich (xc) konsistente Ergebnisse zum Ur-Bereich (xf) liefert.

Dabei ist:

• A ist eine Systemkonstante, die für alle kodierten Werte gleich ist.

• $B_x$ ist statische Signatur von x. Das bedeutet, dass jedes x eine eigenes $B_x$ besitzt und dass $B_x$ konstant ist.

• $D_x$ ist die dynamische Signatur von x. $D_x$ ändert sich in regelmäßigen oder unregelmäßigen Abständen, beispielsweise in jedem Zyklus eines Programms oder zeitgesteuert.

Mittels der codierten Variablen ist es möglich, Fehler festzustellen, die beispielsweise durch eine zufällige Änderung bzw. Verfälschung einzelner Bits entstehen. Dies bedeutet, dass die zu codierenden Werte so auf codierte Werte abgebildet werden, dass Abweichung einzelner Bits erkannt werden können, indem Fehler in einzelnen Bits beispielsweise aufgrund des Hamming-Abstandes zulässiger codierter Werte ungültige Werte im codierten Raum entstehen lassen.

Die Komplexität des Sicherheitsprogramms ist insbesondere abhängig von der Art der Verwaltung von $D_x$. Die Komplexität bleibt beherrschbar, wenn $D_x$ gespeichert wird. Dies erfordert, dass $D_x$ analog zu $x_c$ abgesichert wird.

Eine gesicherte Speicherung jedes $D_x$ in einer gesicherten Variablen erhöht jedoch die Komplexität und den Ressourcenbedarf der gesicherten Softwaresysteme erheblich.

Es ist also eine Aufgabe der vorliegenden Erfindung, die Verwaltung dynamischer Signaturen im Coded Processing zu vereinfachen, so dass dies mit geringer Komplexität ohne Verzicht auf Sicherheit möglich ist. Es ist eine weitere Aufgabe der Erfindung, mit einfachen Mitteln sicherzustellen oder festzustellen, ob die zur Abarbeitung vorgesehenen Programmteile (z.B. "Basisblöcke") tatsächlich abgearbeitet wurden.

Die wesentliche Idee zur Lösung der Aufgaben ist die unabhängige Berechnung der Signaturen von kodierten Variablen in 2 Kanälen. Dabei wird die Summe aller dynamischer Signaturen in einer einzigen kodierten Variablen, der sog. Tracer-Variablen, kombiniert mit der diversitären Berechnung ihrer Signatur.

Die Aufgabe wird insbesondere durch ein Verfahren nach Patentanspruch 1, eine Einrichtung nach Patentanspruch 9 und ein Computerprogrammprodukt nach Patentanspruch 10 gelöst.

Dabei wird ein Verfahren zur Sicherung von Zugriffen auf zumindest eine codierte Variable in einem Computerprogramm mit einer Vielzahl codierter Variablen vorgeschlagen, wobei vorzugsweise jede codierte Variable eine eigene dynamische Signatur aufweist. Dabei wird bei einem Zugriff auf solch eine codierte Variable deren dynamische Signatur in einer vorgeschriebenen Weise verändert. In einer codierten Tracer-Variable wird ein Summenwert für alle dynamischen Signaturen aller anderen codierten Variablen geführt, wobei bei einer Änderung einer dynamischen Signatur einer der codierten Variablen der in der Tracer-Variablen geführte Summenwert analog angepasst wird, und wobei zur Kontrolle die Summe der dynamischen Signaturen der codierten Variablen mit dem in der codierten Tracer-Variablen gespeicherten Summenwert verglichen wird, wobei im Falle einer Diskrepanz eine Fehlerbehandlung ausgelöst wird. Dies ermöglicht eine performante Verwaltung aller Signaturen in einem arithmetisch kodierten Programm unabhängig von dessen Komplexität.

Die Aufgabe wird außerdem durch eine Einrichtung zur Sicherung von Zugriffen auf zumindest eine codierte Variable in einem Computerprogramm, insbesondere eine sicherheitsgerichtete Automatisierungsanwendung, mit einer Vielzahl codierter Variablen gelöst, wobei das Computerprogramm auf der Einrichtung, insbesondere auf einem Computer oder auf einer industriellen Automatisierungskomponente, abläuft, und wobei jede codierte Variable eine eigene dynamische Signatur aufweist. Dabei ist die Einrichtung zur Durchführung des Verfahrens gemäß Patentanspruch 1 eingerichtet. Durch diese Einrichtung können die bereits anhand des Verfahrens diskutierten Vorteile realisiert werden.

Die Aufgabe wird außerdem durch ein Computerprogrammprodukt zur Sicherung von Zugriffen auf zumindest eine codierte Variable in einem Computerprogramm, insbesondere eine sicherheitsgerichtete Automatisierungsanwendung, mit einer Vielzahl codierter Variablen gelöst, wobei das Computerprogrammprodukt derart eingerichtet ist, dass bei einer Ausführung auf einer Einrichtung, insbesondere auf einem Computer oder auf einer industriellen Automatisierungskomponente, das Verfahren gemäß Patentanspruch 1 ausgeführt wird. Durch dieses Computerprogrammprodukt können die bereits anhand des Verfahrens diskutierten Vorteile realisiert werden.

Erfindungsgemäß wird der Summenwert über alle dynamischen Signaturen im Zuge der Kontrolle gebildet, wobei in einer Variante davon ausgegangen ist, dass zu jeder codierten Variablen eine (vorzugsweise uncodierte) mit dieser verknüpften Variable oder Register oder dgl. mit dem jeweils gültigen (also zuletzt geänderten und aktuell in der zuordneten codierten Variablen verwendete) Wert der dynamischen Signatur geführt wird. In einer Variante sind die dynamischen Signaturwerte in einem Array gespeichert. Das vereinfacht die Summenbildung im Kontrollschritt. Es ist aber alternativ auch möglich, den codierten Variablen jeweils den Wert der dynamischen Signatur zu entnehmen, indem jeweils vom Wert der codierten Variablen die statische Signatur abgezogen wird und das Ergebnis in einer Modulo-Operation mit der Systemkonstante "A" verknüpft wird. Diese Alternative ist in ihrer Ausführung aufwendiger (Rechenzeit), kommt aber ohne das separate Speichern der dynamischen Signaturen aus.

Erfindungsgemäß wird vor dem Vergleich auf die Summe der dynamischen Signaturen und auf den in der Tracer-Variablen geführte Summenwert jeweils und ggf. auch mehrfach eine Modulo-Operation mit der für die Codierung aller codierten Variablen und für die Codierung der Tracer-Variablen verwendeten Systemvariablen ("A") angewendet, so dass etwaige Überläufe bei sehr großen Offset-Werten für die zugriffsbedingten Änderungen der dynamischen Signaturen vermieden werden.

Vorteilhafte Varianten des erfindungsgemäßen Verfahrens sind in den abhängigen Patentansprüchen angegeben, deren Merkmale und Vorteile sinngemäß auch für die erfindungsgemäße Einrichtung und das Computerprogrammprodukt gelten.

In einer vorteilhaften Variante des erfindungsgemäßen Verfahrens wird zur Codierung der codierten Variablen eine AN-, ANB-, oder ANBD-Codierung verwendet. Diese Codierungen sind in sicherheitsgerichteten Computerprogrammen, insbesondere in solchen der Automatisierungstechnik, erfolgreich eingeführt.

Vorteilhaft wird bei jedem schreibenden Zugriff auf eine codierte Variable für diese Variable eine neue oder geänderte dynamische Signatur festgelegt, so dass die Anzahl der besonders kritischen Schreibzugriffe anhand der Signatursumme nachvollzogen werden kann. Besonders vorteilhaft wird auch bei jedem lesenden Zugriff auf eine codierte Variable für diese Variable eine neue oder geänderte dynamische Signatur festgelegt.

Dadurch, dass jede codierte Variable eine eigene dynamische Signatur aufweist, muss bei einer Änderung dieser Signatur, also bei jedem Zugriff, nur die Signatur dieser Variablen angepasst werden und der Wert der Tracer-Variablen analog dazu geändert werden, während bei einer im Stand der Technik oft üblichen gemeinsamen dynamischen Signatur vieler oder aller Variablen dann auch jede codierte Variable geändert werden muss.

Vorteilhaft besteht die vorgeschriebene Weise der Änderung der dynamischen Signatur darin, dass entweder stets durch Addition oder stets durch Subtraktion eines festgelegten Wertes, des sog. Offsets, ungleich Null zu oder von der bisherigen dynamischen Signatur der jeweiligen codierten Variablen erfolgt. Somit können einander folgende Änderungen einander nicht ungewollt kompensieren.

Vorteilhaft ergeben die Summen aller Signaturen, also die Summe aller statischen Signaturen und die Summe aller dynamischen Signaturen, jeweils einen korrekt codierten Wert gemäß der gewählten Codierung. Das vereinfacht die Berechnungen mit den Summenwerten und ermöglicht überdies weitere Kontrollen hinsichtlich von Bitfehlern und dgl. in den Signaturen.

Die Vorteile des Verfahrens sind insbesondere gegeben, wenn das Computerprogramm ein Automatisierungsprogramm einer industriellen Automatisierungskomponente ist, und wenn die Kontrolle zumindest einmal in einem Zyklus des Automatisierungsprogramms, vorzugsweise zum Ende des Zyklus, ausgeführt wird. Zyklische Automatisierungsprogramme werden zum einen oft in sicherheitskritischen Bereichen eingesetzt, eignen sich andererseits aber auch wegen ihrer zyklischen Ausführungsstruktur gut dazu, in ihrer Ausführung mittels der Signaturen der codierten Variablen kontrolliert zu werden. Dabei wird vorteilhaft als die Sicherung der Zugriffe mittels der Signaturänderungen die vollständige Abarbeitung aller zur Abarbeitung vorgesehener Programmteile in einem jeweiligen Zyklus des Computerprogramms festgestellt. Das kann dadurch geschehen, dass die in der Tracer-Variablen codierte Summe der dynamischen Signaturen mit einem Erwartungswert verglichen wird, wobei der Erwartungswert dem Produkt des Offsets mit der Anzahl der erwarteten Zugriffe auf die codierten Variablen entspricht.

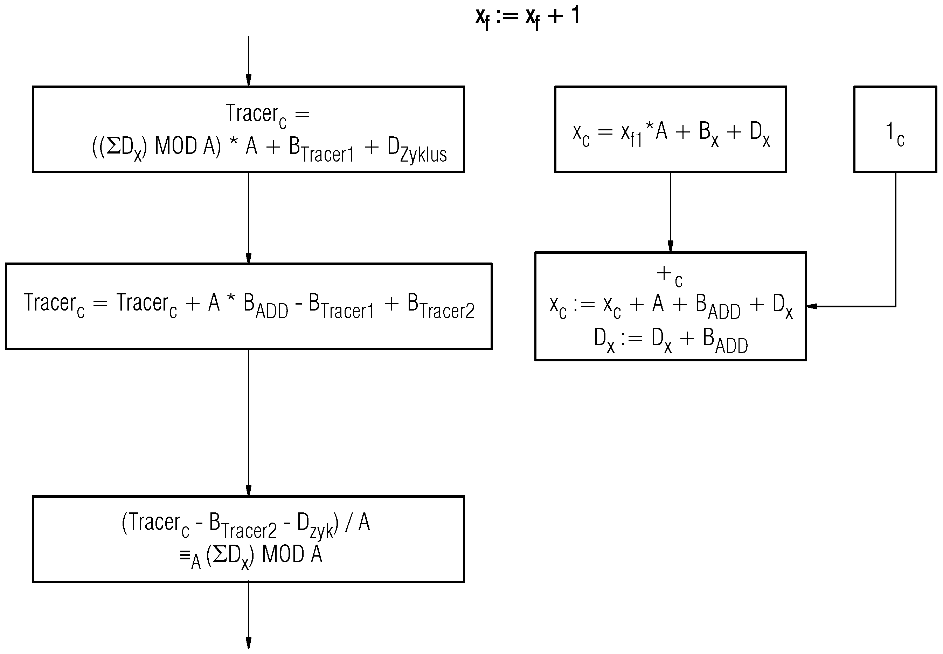

Ein Ausführungsbeispiel des erfindungsgemäßen Verfahrens wird nachfolgend anhand der Zeichnung erläutert. Es dient gleichzeitig zur Erläuterung eines Ausführungsbeispiels einer erfindungsgemäßen Einrichtung und eines ebensolchen Computerprogrammproduktes.

Dabei zeigt die einzige Figur die Sicherung einer Addition zu einer codierten Variablen.

Zur Kontrolle eines Programmlaufes werden im Stand der Technik Laufvariablen, sog. Tracer-Variablen oder kurz "Tracer", eingesetzt, mit deren Inhalt der durchlaufene Programmpfad protokolliert und somit überprüft werden kann. Im vorliegenden Beispiel wird die Tracer-Variable $Tracer_c$ für die Kontrolle der dynamischen Signaturen aller codierten Variablen eines Computerprogramms und die Zugriffe auf alle codierten Variablen des Computerprogramms verwendet. Das vorliegende Beispiel zeigt dazu die codierte Variable $x_c$.

Im vorliegenden Beispiel ist ohne Beschränkung der Allgemeinheit die Variable $x_c$ nach einer Vorschrift ANBD-codiert in der Form:

$$x_c := x_f*A + B_x + D_x$$

codiert.

Dabei ist $D_x$ ist die dynamische Signatur von x. $D_x$ ändert sich in regelmäßigen oder unregelmäßigen Abständen, beispielsweise in jedem Zyklus eines Programms, oder zeitgesteuert. Die Änderung von $D_x$ ist im Stand der Technik regelmäßig von außen vorgegeben, was bedeutet, dass die Änderung der dynamischen Signatur im Stand der Technik asynchron zum Ablauf eines Computerprogramms, insbesondere eines Automatisierungsprogramms, erfolgt. Im Stand der Technik ist die dynamische Signatur $D_x$ während eines Zyklus regelmäßig konstant. Im vorliegenden Ausführungsbeispiel ändert sich Dx jedoch bei jedem Zugriff (lesend oder schreibend) auf die codierte Variable xc; in anderen Varianten kann Dx sich beispielsweise nur bei schreibenden Zugriffen ändern. Dies bedeutet, dass anhand des Startwerts (Initialisierungswert o.ä.) von Dx und der bei jedem Zugriff zur Änderung verwendeten Änderungswertes die Anzahl in einem Basisblock, also eines linear zu durchlaufenden Programmabschnittes eines Computerprogramms, Zugriffe aus dem aktuellen Dx errechnet und mit einem Erwartungswert verglichen werden kann, so dass die vollständige Abarbeitung eines Programmschrittes kontrolliert werden kann.

Erfindungsgemäß erfolgt nun die Vergabe der D-Signaturen so, dass die Summe aller Signaturen ($B_x$; $D_x$) immer einen korrekt codierten ANBD-kodierten Wert ergibt.

Es gilt also:

$$(\textstyle\sum_x B_x)\ \mathrm{mod}\ A = B_{Summe}$$

$$(\textstyle\sum_x D_x)\ \mathrm{mod}\ A = D_{Summe}$$

Es wird angenommen, dass zu jeder codierten Variablen in einer separaten Variablen, Speicher, Register oder dafür reservierten Bitbereich der codierten Variablen die jeweils aktuell gültigen Werte der Signaturkonstanten Bx und Dx gespeichert sind.

Die B-Signaturen sind konstant. Daher ist auch die Summe $B_{Sum-me}$ konstant. Der Wert der Summe ist hierbei nicht von Bedeutung.

Diese Summe der dynamischen Signaturen $D_{Summe}$ wird mit einem kodierten Wert $Tracer_c$ verglichen, dessen Signatur sich entweder nur um einen festen Wert von der Signatur der Summe unterscheidet oder der die Signatur in kodierter Form korrekt speichert; die Varianten haben also die Form:

- $$Tracer_c = A*X + B_{Tracer} + D_{Summe}$$

  oder

- $$Tracer_c = A*D_{summe} + A^2*X + B_{Tracer} + D_{Tracer}$$

Der Wert von X hat in beiden Varianten für die erfinderische Idee keine Bedeutung. Er dient üblicher Weise dazu die Berechnung von $Tracer_c$ zu vereinfachen. Mit ihm können auch zusätzliche Sicherheitsanforderungen erfüllt werden.

Erfindungsgemäß wird an einem Kontrollpunkt eines Computerprogramms, beispielsweise am Ende eines Zyklus eines Automatisierungsprogramms, die Summe $D_{Summe}$ der D-Signaturen aller codierter Variablen errechet. $D_{Summe}$ wird zusätzlich diversitär aus dem Inhalt einer codierten Tracer-Variablen $Tracer_c$ berechnet, wobei deren Wert bei jedem Zugriff auf xc, bei dem das zugehörige Dx geändert wird, in analoger weise geändert wird.

Ein hier betrachteter Basisblock besteht aus einer linearen Folge von Rechenschritten; im vorliegenden Beispiel aus der Figur ist auf der rechten Seite ein Basisblock gezeigt, der in codierter Arithmetik die Zahl "1" zu der codierten Variablen xc addiert.

Jeder Rechenschritt eines Basisblocks hat eine feste Zahl von Zugriffen auf kodierte Werte. Daher ändert sich $D_{Summe}$ um einen konstanten Wert. Daher ist auch die Änderung von $D_{Summe}$ für den gesamten Basisblock (in der Literatur auch als "Basicblock" bezeichnet) konstant. Diese Änderung (evtl. mit A multipliziert) muss auch auf den Tracer, also die Tracer-Variable $Tracer_c$, addiert werden. Der Tracer wird damit so kodiert, dass er auf Korrektheit geprüft werden kann.

Im fehlerfreien Fall gilt, je nach gewählter Struktur der Tracer-Variablen:

- 
$$Tracer_c = A*X + B_{Tracer} + D_{Summe}$$

  bzw.

- 
$$Tracer_c = A*D_{Summe} + A^2*X + B_{Tracer} + D_{Tracer}$$

Mit diesem Verfahren wird erreicht, dass nur noch $Tracer_c$ mit den bisher üblichen Methoden abgesichert werden muss, also beispielsweise in codierter Form gespeichert und verarbeitet werden muss; bei geringeren Sicherheitsanforderungen kann $Tracer_c$ auch uncodiert sein. Eine Aktion, die den Programmlauf bzw. die Daten verändert, muss daher für die Absicherung nur für $Tracer_c$ um eine feste Befehlsfolge ergänzt werden, damit die Anzahl der Zugriffe mit dem Erwartungswert konform bleibt. Bisher erfolgte die Ergänzung für jede betroffene kodierte Variable separat.

In einer vorteilhaften Variante erfolgt die Korrektur der D-Signaturen so, dass an einer klar definierten Stelle im Basicblock (z.B. Ende des Basicblock) $D_{Summe}$ der ID des Basicblock entspricht. Hierdurch ergibt sich eine einfache Prüfmöglichkeit. Da sich $D_{Summe}$ zyklisch wiederholt, ist diese Prüfung für höhere SIL (Sichrheitslevel) nicht geeignet.

Am Zyklus- oder Programmende erfolgt dann eine Konsistenzprüfung mit 2 Kriterien:

1. $Tracer_c$ ist korrekt kodiert
und

2. 

$$((Tracer_c - B_{TracerLast} - D_{zyk}) / A) \; MOD \; A = (\textstyle\sum D_x) \; MOD \; A$$

Dabei wird davon ausgegangen, dass sich die B-Signatur ändern kann; bei der Konsistenzprüfung muss dann der letztgültige Wert für B, also $B_{TracerLast}$ ("letztgültiges B der Tracer-Variablen"), verwendet werden. Gleichfalls gilt in diesem Beispiel, das die D-Signatur in einem Zyklus konstant ist, daher wird hier D als $D_{zyk}$ verwendet (D aus dem aktuellen Zyklus).

Zur Vermeidung/Beherrschung von Überläufen kann der Wert der Tracer-Variablen z.B. durch die Operation

$$Tracer_c := Tracer \; MOD \; A^2$$

begrenzt werden, wenn

$$B_{TracerLast} - D_{zyk} < A$$

gilt.

Hinweis: Die übliche Art, die Signatur von kodierten Variablen konsistent zu halten, ist die Addition einer Konstanten in leeren Pfaden von Verzweigungen bzw. Schleifen. Wenn dies ausschließlich für $Tracer_c$ durchgeführt wird, dann bleibt die Komplexität der kodierten Verarbeitung linear zum Standard.

Die Absicherung der Berechnung von $Tracer_c$ ist dabei von untergeordneter Bedeutung. Für niedrige Sicherheitslevel kann evtl. auf eine Absicherung verzichtet werden.

In der Figur ist Ablauf der kodierten Operation zu $x_f := x_f + 1$ dargestellt.

Dabei ist im linken Teil der Figur der Einfluss der Additionsoperation auf die Tracer-Variable $Tracer_c$ gezeigt, während im rechten Teil der Figur die Addition von 1 auf die Variable $x_c$ im codierten Raum dargestellt ist.

Die Variable $x_c$ ist definiert als codierte Variable, wobei die nicht codierte Variable $x_{f1}$ bzw. deren Wert mit der Systemvariablen A multipliziert ist. Zusätzlich addieren sich zum Wert der kodierten Variablen $x_c$ die Signaturen $B_x$ und $D_x$.

Der zur Addition vorgesehene Wert 1 wird auch kodiert verarbeitet mit der codierten Operation $+_c$; der codierte Wert $1_c$ besteht ebenfalls aus der Systemkonstanten A multipliziert mit 1, einer Signatur $B_{ADD}$ (statische Signatur) und $D_x$

der dynamischen Signatur $D_x$.

In diesem Beispiel ergibt sich die neue dynamische Signatur $D_x$ aus der bisherigen dynamischen Signatur $D_x$ plus $B_{ADD}$. Diese neue dynamische Signatur $D_x$ wird zugeordnet zu der Variablen $X_c$ im System gespeichert. In einer alternativen (jedoch weniger sicheren) Ausführungsform können alle codierten Variablen im System die gleiche dynamische Signatur $D_x$ aufweisen.

Auf der linken Seite der Figur ist analog zu dem rechts dargestellten Additionsvorgang (Inkrement um 1) die Behandlung der kodierten Tracer-Variablen $Tracer_c$ dargestellt. In der kodierten Tracer-Variablen $Tracer_c$ findet sich die Summe aller bisherigen dynamischen Signaturen $D_x$ in codierter Form, wobei durch die Modulo-A-Operation MOD A dafür gesorgt wird, dass durch die Summierung kein Überlauf stattfinden kann. Weiter umfasst die Tracer-Variable $Tracer_c$ eine eigene statische Signatur $B_{Tracer1}$ und die dynamische Signatur $D_{Zyklus}$ (kurz: $D_{zyk}$), wobei hier davon ausgegangen wird, dass in der Systemvariablen $D_{Zyklus}$ stets die derzeitige dynamische Signatur der Tracer-Variablen $Tracer_c$ gehalten wird.

In der zweiten Zeile der Figur ist nun die Erweiterung der Tracer-Variablen $Tracer_c$ durch den Additionsvorgang gezeigt. Neben dem bisherigen Wert von $Tracer_c$ wird zunächst A mal $B_{ADD}$ addiert, weil in der kodierten Tracer-Variablen $Tracer_c$ der "Nutzinhalt" (Summe der $D_x$) mit der Systemvariablen A multipliziert gehalten wird. Zudem wird die bisherige statische Signatur $B_{Tracer1}$ der Tracer-Variablen $Tracer_c$ abgezogen und eine neue, aktuelle statische Signatur $B_{Tracer2}$ zum Wert der Tracer-Variablen $Tracer_c$ addiert. Man sieht, dass in diesem Beispiel davon ausgegangen wird, dass die Tracer-Variable $Tracer_c$ anstelle einer "herkömmlichen" statischen Signatur B eine sich ebenfalls ändernde "quasi-statische" Signatur $B_{Tra-cer1}$ bzw. $B_{Tracer2}$ aufweist. Dies ist von Vorteil, weil zwar die übrigen kodierten Variablen im System nunmehr erfindungsgemäß über eine dynamische Signatur $D_x$ verfügen, aber gerade die dynamische Signatur $D_{Zyklus}$ der Tracer-Variablen eben nicht mit dem Verfahren der Erfindung abgesichert werden kann. Aus diesem Grund ist hier vorteilhaft aus der bislang absolut statischen Signatur $B_{Tracer1}$ eine sich ändernde, quasi-statische Signatur gemacht worden. In anderen Ausführungsbeispielen, insbesondere solchen, die einen niedrigeren SIL (Security Integrity Level - Sicherheitsstufe) benötigen, kann auf eine solche Dynamisierung der statischen Signatur der Tracer-Variablen $Tracer_c$ auch verzichtet werden.

In der dritten, untersten Zeile der Figur ist der Kontrollschritt in der Auswertung der Tracer-Variablen $Tracer_c$ gezeigt. Dabei ist in der oberen Zeile der Vergleichsoperation ("Modulo-Vergleich") gezeigt, wie der Wert der Tracer-Variablen $Tracer_c$ dekodiert wird; dies entspricht dem Verfahren aus dem Stand der Technik. Das Ergebnis muss "modulo-" identisch sein zu dem Ergebnis der in der zweiten Zeile gezeigten Rechenoperationen. Dabei wird ein sogenannter Modulo-Vergleich zu der Summe der dynamischen Signaturen aller kodierten Variablen im System durchgeführt, wobei das Summen-Ergebnis zunächst mit einer Modulo A Operation verarbeitet wird, um den Effekt etwaiger Überlaufe über den Zahlenwert der Systemkonstanten A zu eliminieren. Für den Fall, für den die Vergleichsoperation nicht erfüllt ist, kann angenommen werden, dass ein Fehler vorliegt. In einem solchen Fall können verschiedene Maßnahmen vorgesehen sein, beispielsweise die Ausgabe einer Fehlermeldung oder die Verwendung von sicheren Ersatzwerten für Systemparameter oder dergleichen.

Die in der Tracer-Variablen $Tracer_c$ gehaltene Summe der dynamischen Signaturen $D_x$ ist gleichzeitig ein Maß für die Anzahl der Zugriffe auf die kodierten Variablen. Zumindest für Basisblöcke, also lineare Programmstrukturen, steht jeweils die Anzahl der Zugriffe auf codierte Variablen in einem Programmzyklus fest. Diese Anzahl kann als ein Erwartungswert verwendet werden, dessen Vergleich mit dem Inhalt der kodierten Tracer-Variablen $Tracer_c$ Auskunft darüber gibt, ob der Programmcode in vorgeschriebener Weise abgearbeitet wurde. Natürlich muss der Wert der Tracer-Variablen dazu dekodiert werden (Zeile 1) und das Ergebnis durch $B_{ADD}$ oder einen anderen regelmäßigen Offset dividiert werden; alternativ kann der Erwartungswert aus nicht die Anzahl der erwarteten Zugriffe sein, sondern der erwartete Summen-Signaturwert $\sum D_x$ oder $(\sum D_x)$ MOD A. Im Falle einer Diskrepanz kann ebenfalls eine Fehlerbehandlung erfolgen, wie bereits an dem Fall diskutiert, in dem es eine Diskrepanz in den dynamischen Signaturen als solche geben sollte.


**Patentansprüche**

1. Computerimplementiertes Verfahren zur Sicherung von Zugriffen auf zumindest eine codierte Variable ($x_c$) in einem Computerprogramm mit einer Vielzahl codierter Variablen,

   wobei viele oder jede codierte Variable ($x_c$) eine eigene dynamische Signatur ($D_x$) aufweist,
   wobei das Verfahren derart eingerichtet ist,
   dass bei einem Zugriff auf diese codierten Variablen ($x_c$) deren dynamische Signatur ($D_x$) jeweils in einer vorgeschriebenen Weise verändert wird,
   dass in einer codierten Tracer-Variable ($Tracer_c$) ein Summenwert ($\sum D_x$) für alle dynamischen Signaturen ($D_x$) aller anderen codierten Variablen ($x_c$) geführt wird, wobei bei einer Änderung einer dynamischen Signatur ($D_x$)

einer der codierten Variablen ($x_c$) der in der Tracer-Variablen ($Tracer_c$) geführte Summenwert ($\sum D_x$) analog angepasst wird, und

dass zur Kontrolle die Summe der dynamischen Signaturen ($D_x$) der codierten Variablen ($x_c$) mit dem in der codierten Tracer-Variablen ($Tracer_c$) gespeicherten Summenwert ($\sum D_x$) verglichen wird, wobei im Falle einer Diskrepanz eine Fehlerbehandlung ausgelöst wird,

wobei der Summenwert ($\sum D_x$) über alle dynamischen Signaturen ($D_x$) im Zuge der Kontrolle gebildet wird, und

wobei vor dem Vergleich auf die Summe der dynamischen Signaturen ($D_x$) und auf den in der Tracer-Variablen ($Tracer_c$) geführten Summenwert ($\sum D_x$) jeweils eine Modulo-Operation mit der für die Codierung aller codierten Variablen ($x_c$) und für die Codierung der Tracer-Variablen ($Tracer_c$) verwendeten Systemkonstanten (A) angewendet wird.

2. Verfahren nach Patentanspruch 1, wobei das Verfahren derart eingerichtet ist, dass zur Codierung der codierten Variablen ($x_c$) eine AN-, ANB-, oder ANBD-Codierung verwendet wird.

3. Verfahren nach einem der vorhergehenden Patentansprüche, wobei das Verfahren derart eingerichtet ist, dass bei jedem schreibenden Zugriff auf eine codierte Variable ($x_c$) für diese Variable eine neue oder geänderte dynamische Signatur ($D_x$) festgelegt wird.

4. Verfahren nach Patentanspruch 3, wobei das Verfahren derart eingerichtet ist, dass bei jedem lesenden Zugriff auf eine codierte Variable ($x_c$) für diese Variable eine neue oder geänderte dynamische Signatur ($D_x$) festgelegt wird.

5. Verfahren nach einem der vorhergehenden Patentansprüche, wobei das Verfahren derart eingerichtet ist, dass die vorgeschriebene Weise entweder stets durch Addition oder stets durch Subtraktion eines festgelegten Wertes ($B_{ADD}$) ungleich Null zu oder von der bisherigen dynamischen Signatur ($D_x$) der jeweiligen codierten Variablen ($x_c$) erfolgt.

6. Verfahren nach einem der vorhergehenden Patentansprüche, wobei das Verfahren derart eingerichtet ist, dass die Summe aller Signaturen ($B_x$, $D_x$) jeweils einen korrekt codierten Wert gemäß der gewählten Codierung ergeben.

7. Verfahren nach einem der vorhergehenden Patentansprüche, wobei das Verfahren derart eingerichtet ist, dass das Computerprogramm ein Automatisierungsprogramm einer industriellen Automatisierungskomponente ist, und dass die Kontrolle zumindest einmal in einem Zyklus des Automatisierungsprogramms, vorzugsweise zum Ende des Zyklus, ausgeführt wird.

8. Verfahren nach einem der vorhergehenden Patentansprüche, wobei das Verfahren derart eingerichtet ist, dass als die Sicherung der Zugriffe mittels der Signaturänderungen die vollständige Abarbeitung aller zur Abarbeitung vorgesehener Programmteile in einem jeweiligen Zyklus des Computerprogramms festgestellt wird.

9. Einrichtung zur Sicherung von Zugriffen auf zumindest eine codierte Variable ($x_c$) in einem Computerprogramm mit einer Vielzahl codierter Variablen ($x_c$),

wobei das Computerprogramm auf der Einrichtung, insbesondere auf einem Computer oder auf einer industriellen Automatisierungskomponente, abläuft,

wobei viele oder jede codierte Variable ($x_c$) eine eigene dynamische Signatur aufweist ($D_x$),

wobei die Einrichtung zur Durchführung des Verfahrens gemäß Patentanspruch 1 eingerichtet ist.

10. Computerprogrammprodukt zur Sicherung von Zugriffen auf zumindest eine codierte Variable ($x_c$) in einem Computerprogramm mit einer Vielzahl codierter Variablen ($x_c$), wobei das Computerprogrammprodukt derart eingerichtet ist, dass bei einer Ausführung auf einer Einrichtung, insbesondere auf einem Computer oder auf einer industriellen Automatisierungskomponente, das Verfahren gemäß Patentanspruch 1 ausgeführt wird.

11. Computerprogrammprodukt nach dem vorhergehenden Patentanspruch, das Computerprogrammprodukt derart eingerichtet ist, dass das Computerprogrammprodukt als Teil oder Erweiterung einer Firmware oder als Teil oder Erweiterung eines Betriebssystems eines Computers, insbesondere einer industriellen Automatisierungskomponente, ausgestaltet ist.

**Claims**

1. Computer-implemented method for securing access operations to at least one coded variable ($x_c$) in a computer program comprising a multiplicity of coded variables,

   wherein a large number of or each coded variable ($x_c$) has its own dynamic signature ($D_x$),
   wherein the method is configured such that,
   in the event of an access operation to this coded variable ($x_c$), its dynamic signature ($D_x$) is changed in each case in a prescribed way,
   a sum value ($\Sigma D_x$) for all dynamic signatures ($D_x$) of all other coded variables ($x_c$) is carried in a coded tracer variable (Tracer$_c$),
   wherein, in the event of a change in a dynamic signature ($D_x$) of one of the coded variables ($x_c$), the sum value ($\Sigma D_x$) carried in the tracer variable (Tracer$_c$) is modified in the same way, and, for the check, the sum of the dynamic signatures ($D_x$) of the coded variables ($x_c$) is compared with the sum value ($\Sigma D_x$) stored in the coded tracer variable (Tracer$_c$), wherein, in the event of a discrepancy, error handling is triggered,
   wherein the sum value ($\Sigma D_x$) of all dynamic signatures ($D_x$) is formed in the course of the check, and wherein, prior to the comparison, a respective modulo operation comprising the system constants (A) used to code all coded variables ($x_c$) and to code the tracer variable (Tracer$_c$) is applied to the sum of the dynamic signatures ($D_x$) and to the sum value ($\Sigma D_x$) carried in the tracer variable (Tracer$_c$).

2. Method according to Claim 1,
   wherein the method is configured such that AN, ANB or ANBD coding is used to code the coded variables ($x_c$).

3. Method according to either of the preceding claims,
   wherein the method is configured such that, upon each write access operation to a coded variable ($x_c$), a new or changed dynamic signature ($D_x$) is defined for this variable.

4. Method according to Claim 3,
   wherein the method is configured such that, upon each read access operation to a coded variable ($x_c$), a new or changed dynamic signature ($D_x$) is defined for this variable.

5. Method according to one of the preceding claims,
   wherein the method is configured such that the prescribed way is that of either always adding or always subtracting a defined value ($B_{ADD}$) other than zero to or from the previous dynamic signature ($D_x$) of the respective coded variable ($x_c$).

6. Method according to one of the preceding claims,
   wherein the method is configured such that the sum of all signatures ($B_x$, $D_x$) in each case gives a correctly coded value in accordance with the selected coding.

7. Method according to one of the preceding claims,
   wherein the method is configured such that the computer program is an automation program of an industrial automation component, and that the check is carried out at least once in a cycle of the automation program, preferably at the end of the cycle.

8. Method according to one of the preceding claims,
   wherein the method is configured such that the complete execution of all program portions intended to be executed in a respective cycle of the computer program is defined as the securing of the access operations by way of the signature changes.

9. Device for securing access operations to at least one coded variable ($x_c$) in a computer program comprising a multiplicity of coded variables ($x_c$),

   wherein the computer program is executed on the device, in particular on a computer or on an industrial automation component,
   wherein a large number of or each coded variable ($x_c$) has its own dynamic signature ($D_x$),
   wherein the device is configured to perform the method according to Claim 1.

10. Computer program product for securing access operations to at least one coded variable ($x_c$) in a computer program comprising a multiplicity of coded variables ($x_c$), wherein the computer program product is configured such that, when it is executed on a device, in particular on a computer or on an industrial automation component, the method according to Claim 1 is carried out.

11. Computer program product according to the preceding claim, wherein the computer program product is configured such that the computer program product is designed as part of or an upgrade to firmware or as part of or an upgrade to an operating system of a computer, in particular of an industrial automation component.

**Revendications**

1. Procédé, mis en œuvre par ordinateur, de sécurisation d'accès à au moins une variable ($x_c$) codée d'un programme d'ordinateur ayant une pluralité de variables codées,

   dans lequel de nombreuses où chaque variable ($x_c$) codée a sa propre signature ($D_X$) dynamique,
   dans lequel le procédé est agencé, de manière à ce que, lors d'un accès à ces variables ($x_c$) codées, on modifie leur signature ($D_X$) dynamique respectivement d'une façon décrite à l'avance,
   en ce que dans une variable (Tracer$_C$) pilote codée, on calcule une valeur ($\sum D_X$) de somme pour toutes les signatures ($D_X$) dynamiques de toutes les autres variables ($x_c$) codées, dans lequel, lors d'une modification d'une signature ($D_X$) dynamique de l'une des variables ($x_c$) codées, on adapte d'une manière analogue la valeur ($\sum D_X$) somme calculée dans les variables (Tracer$_C$) pilotes et,
   en ce que pour la commande, on compare la somme des signatures ($D_X$) dynamiques des variables ($x_c$) codées à la valeur ($\sum D_X$) de somme mise en mémoire dans les variables (Tracer$_C$) pilotes codées, dans lequel, dans le cas d'une divergence, on déclenche un traitement d'erreur,
   dans lequel on forme la valeur ($\sum D_X$) de somme sur toutes les signatures ($D_X$) dynamiques au cours de la commande et dans lequel avant la comparaison, on applique à la somme des signatures ($D_X$) dynamiques et à la valeur ($\sum D_X$) de somme calculée dans les variables (Tracer$_C$) pilotes, respectivement une opération modulo avec les constantes (A) de système utilisées pour le codage de toutes les variables ($x_c$) codées et pour le codage des variables (Tracer$_C$) pilotes.

2. Procédé suivant la revendication 1,

   dans lequel le procédé est agencé de manière,
   à utiliser pour le codage des variables ($x_c$) codées un codage AN-, ANB-, ou ANBD.

3. Procédé suivant l'une des revendications précédentes, dans lequel le procédé est agencé, de manière à fixer pour chaque accès de description à une variable ($x_c$) codée, une signature ($D_X$) dynamique nouvelle ou modifiée pour cette variable.

4. Procédé suivant la revendication 3,
   dans lequel le procédé est agencé, de manière à fixer pour chaque accès en lecture à une variable ($x_c$) codée, une signature ($D_X$) dynamique nouvelle ou modifiée pour cette variable.

5. Procédé suivant l'une des revendications précédentes, dans lequel le procédé est agencé, de manière à ce que la façon décrite à l'avance s'effectue soit constamment par addition soit constamment par soustraction d'une valeur ($B_{ADD}$) fixée différente de zéro ou de la signature ($D_X$) dynamique en vigueur jusqu'ici des variables ($x_c$) codées respectives.

6. Procédé suivant l'une des revendications précédentes, dans lequel le procédé est agencé pour que la somme de toutes les signatures ($B_X$, $D_X$) donne respectivement une valeur codée correcte suivant le codage choisi.

7. Procédé suivant l'une des revendications précédentes, dans lequel le procédé est agencé, de manière à ce que le programme d'ordinateur soit un programme d'automatisation d'un composant d'automatisation industrielle et de manière à réaliser la commande au moins une fois dans un cycle du programme d'automatisation, de préférence à la fin du cycle.

8. Procédé suivant l'une des revendications précédentes,

dans lequel le procédé est agencé pour fixer, dans un cycle respectif du programme d'ordinateur, comme sécurisation des accès au moyen des modifications de signature, l'élaboration complète de toutes les parties du programme prévues pour l'élaboration.

9. Dispositif de sécurisation d'accès à au moins une variable ($x_c$) codée d'un programme d'ordinateur ayant une pluralité de variables ($x_c$) codées,

dans lequel le programme d'ordinateur se déroule sur le dispositif, en particulier sur un ordinateur ou sur un composant d'automatisation industrielle,
dans lequel de nombreuses où chaque variable ($x_c$) codée a ($D_x$) sa propre signature dynamique,
dans lequel
le dispositif est agencé pour effectuer le procédé suivant la revendication 1.

10. Produit de programme d'ordinateur pour la sécurisation d'accès à au moins une variable ($x_c$) codée d'un programme d'ordinateur ayant une pluralité de variables ($x_c$) codées, dans lequel le produit de programme d'ordinateur est agencé de manière à effectuer, lors d'une réalisation sur un dispositif, en particulier sur un ordinateur ou sur un composant d'automatisation industrielle, le procédé suivant la revendication 1.

11. Produit de programme d'ordinateur suivant la revendication précédente,
le produit de programme d'ordinateur étant agencé de manière à ce que le produit de programme d'ordinateur soit conformé sous la forme d'une partie ou d'une extension d'un microprogramme ou comme partie ou comme une extension d'un système de fonctionnement d'un ordinateur, en particulier d'un composant d'automatisation industrielle.

$$x_f := x_f + 1$$

$$\text{Tracer}_C = ((\Sigma D_X)\ \text{MOD}\ A) * A + B_{\text{Tracer1}} + D_{\text{Zyklus}}$$

$$x_C = x_{f1} * A + B_X + D_X$$

$$1_C$$

$$\text{Tracer}_C = \text{Tracer}_C + A * B_{\text{ADD}} - B_{\text{Tracer1}} + B_{\text{Tracer2}}$$

$$+_C$$
$$x_C := x_C + A + B_{\text{ADD}} + D_X$$
$$D_X := D_X + B_{\text{ADD}}$$

$$(\text{Tracer}_C - B_{\text{Tracer2}} - D_{\text{zyk}})\ /\ A$$
$$\equiv_A (\Sigma D_X)\ \text{MOD}\ A$$

EP 4 200 727 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• DE 102010037457 A1

**In der Beschreibung aufgeführte Nicht-Patentliteratur**

• **DRUCKSCHRIFTEN SCHIFFEL et al.** ANB- and ANBDmem-Encoding: Detecting Hardware Errors in Software. *LNCS,* 2010, vol. 6351, 169-182